# FASCICULE DE BREVET EUROPEEN

(11) **EP 2 326 942 B1**
(45) Date de publication et mention de la délivrance du brevet: **20.06.2012**
(21) Numéro de dépôt: 09782990.7
(22) Date de dépôt: 15.09.2009
(51) Int. Cl.: G01N 23/227

(54) **PROCEDE DE CARACTERISATION DE COUCHES DIELECTRIQUES PAR SPECTROSCOPIE DE PHOTO-EMISSION ULTRAVIOLETTE**
VERFAHREN ZUR CHARAKTERISIERUNG DIELEKTRISCHER FILME MITTELS UV-PHOTOEMISSIONSSPEKTROSKOPIE
METHOD OF CHARACTERIZING DIELECTRIC FILMS BY ULTRAVIOLET PHOTOEMISSION SPECTROSCOPY

(30) Priorité: 17.09.2008 FR 0856242
(43) Date de publication de la demande: 01.06.2011
(73) Titulaire: Commissariat à l'Énergie Atomique et aux Énergies Alternatives, 75015 Paris (FR)
(72) Inventeur: MARTINEZ, Eugénie, F-38760 Varces Allieres Et Risset (FR); GUEDJ, Cyril, F-38760 Varces Allieres Et Risset (FR)
(74) Mandataire: Ilgart, Jean-Christophe
(86) Numéro de dépôt international: PCT/EP2009/061897
(87) Numéro de publication internationale: WO 2010/031748

(56) Documents cités:
- L. DIEDERICH, O. M. KÜTTEL, P. AEBI AND L. SCHLAPBACH: "Electron affinity and work function of differently oriented and doped diamond surfaces determined by photoelectron spectroscopy" SURFACE SCIENCE, vol. 418, no. 1, 27 novembre 1998 (1998-11-27), pages 219-239, XP002527077
- V. V. AFANAS'EV, A. STESMANS: "Internal photoemission at interfaces of high- insulators with semiconductors and metals" J. APPL. PHYS., vol. 102, 25 octobre 2007 (2007-10-25), pages 081301-1-081301-28, XP002527121
- ADAMCHUK V K ET AL: "Internal photoemission spectroscopy of semiconductor-insulator interfaces" PROGRESS IN SURFACE SCIENCE, OXFORD, GB, vol. 41, no. 2, 1 octobre 1992 (1992-10-01), pages 111-211, XP024470022 ISSN: 0079-6816 [extrait le 1992-10-01]

## Description

Le sujet de cette invention est un procédé de caractérisation de couches diélectriques par spectroscopie de photo-émission ultraviolette qui, comme on le verra, trouve plus particulièrement utilité avec les diélectriques épais, typiquement de l'ordre de 100 nanomètres.

L'affinité électronique des diélectriques à forte ou faible permitivité est une propriété importante à mesurer dans les industries électroniques, puisqu'elle conditionne le niveau des courants électriques de fuite aux interfaces et donc la fiabilité des composants.

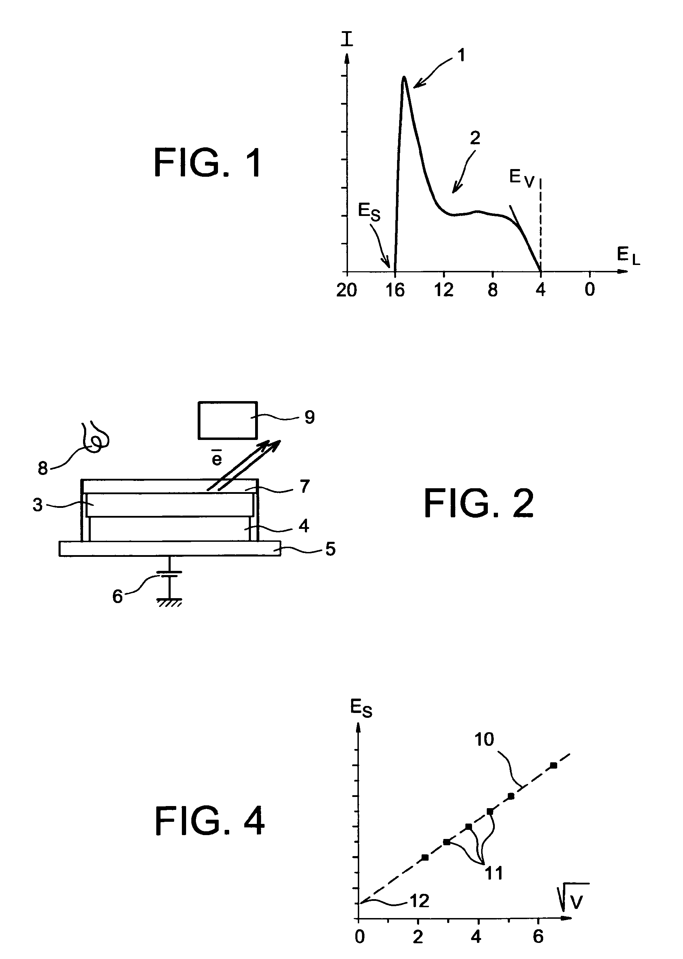

Des mesures de cette affinité électronique peuvent se faire par la spectroscopie de photo-émission ultraviolette, voir p.ex. Diederich et al. Surface Science 418 (1), 219-239, 1998. Le matériau diélectrique est éclairé par des rayons ultraviolets, ayant une énergie *hv* = 20 à 50 *eV*, qui ionisent les atomes du matériau. Des électrons sont alors émis hors de sa surface et leur énergie cinétique E_{c} peut être mesurée une fois qu'ils ont été détectés. Il est possible de tracer un spectre de l'intensité d'émission des électrons détectés en fonction de leur énergie de liaison E_{L}, en appliquant la formule *E_{L}* = *hv-E_{c}*. Le spectre typique illustré à la figure 1 comporte un pic 1 là où l'énergie de liaison E_{L} est la plus élevée, et qui correspond aux électrons secondaires ralentis dans le matériau. Le reste du spectre a une forme plutôt en palier et correspond aux électrons de la bande de valence du matériau. Le spectre est limité par un seuil de photo-émission Eₛ du côté du pic 1 et par un autre seuil Eᵥ qui définit le niveau maximum d'occupation de la bande de valence. L'affinité électronique du diélectrique est ensuite calculée par la relation *qx* = *hv* - *E_{g}* - *Eₛ* + *Eᵥ*, où *E_{g}* est le gap du matériau, supposé connu et qui peut être mesuré par les techniques XPS, ellipsométriques ou REELS. Le mot « gap », qui signifie « écart » en anglais, désigne l'intervalle en énergie qui sépare le haut de la bande de valence d'un matériau du bas de sa bande de conduction. E_{S} et E_{V} sont en pratique obtenus par l'intersection entre des ajustements linéaires des portions adjacentes du spectre et l'axe horizontal du diagramme.

Une difficulté du procédé de caractérisation concerne la détermination exacte du seuil de photo-émission E_{S}, puisqu'il correspond aux électrons dont l'énergie cinétique est nulle. Les électrons doivent céder de l'énergie pour s'extraire du matériau, entrer dans le spectromètre et être détectés. Leur détection est donc impossible sans précaution. Il est classique d'appliquer une tension électrique continue de polarisation V à l'échantillon soumis à la mesure, de manière à accélérer les électrons arrachés à sa surface et à leur donner une énergie supplémentaire suffisante pour franchir la barrière de potentiel de surface du spectromètre. Cette tension appliquée à l'échantillon peut être comprise entre -4 V et -10 V. Le seuil mesuré sur le diagramme est alors égal à *E_{S}* + |*V*|, et il suffit de lui soustraire la valeur, connue puisque choisie par l'opérateur, de la tension de polarisation V pour retrouver la valeur du seuil Eₛ.

Mais cette façon de procéder est inapplicable avec les diélectriques épais, puisque leur seuil de photo-émission Eₛ varie en fonction de la tension de polarisation V qui leur est appliquée, selon par exemple le tableau 1 (pour une couche de diélectrique SiOCH poreux de 100 nm d'épaisseur). Ce seuil Eₛ ne dépend pas ou peu de cette tension de polarisation quand les échantillons sont plus minces, de 10 nm par exemple :

| V(V) | Eₛ(ₑV) | Eᵥ(ₑV) |
|---|---|---|
| -5 | 20,5 | 3,9 |
| -10 | 22,9 | 4,0 |
| -15 | 24, 9 | 4,0 |
| -20 | 26,7 | 4, 1 |
| -25 | 28,3 | 4,0 |
| -40 | 32,5 | 4,2 |

Le seuil Eᵥ de maximum de la bande de valence reste par contre à peu près uniforme.

L'objet de l'invention est de proposer un procédé de caractérisation amélioré du seuil de photo-émission d'un diélectrique épais, qui corrige l'influence de la tension de polarisation sur le spectre de photo-émission ultraviolette du diélectrique, et qui puisse fournir une référence de ce seuil, c'est-à-dire une estimation fiable pour une tension de polarisation nulle, alors même qu'une mesure directe à cette polarisation nulle est impossible, comme mentionné en page 2.

Un aspect général de l'invention est alors un procédé de caractérisation d'une couche diélectrique par spectroscopique de photo-émission ultraviolette, comprenant une polarisation électrique de la couche sous une tension continue et une irradiation de la couche par un rayonnement ultraviolet. La mesure du seuil de photo-émission est répétée en faisant varier la tension continue V sur une gamme allant de -4V à -40 V par exemple, de manière à instaurer des champs électriques inférieurs à 10⁷ V/cm, selon l'épaisseur de l'échantillon. Un seuil de photo-émission de référence est calculé par une régression linéaire sur une droite regroupant les seuils de photo-émission mesurés en fonction de la racine carrée de la tension V appliquée.

Les inventeurs ont en effet constaté une corrélation linéaire entre le seuil de photo-émission et la racine carrée de la tension de polarisation à travers l'échantillon, et avec plus de sûreté encore pour les valeurs de champ inférieures à environ 10⁷ V /cm, alors que cette corrélation n'existe plus pour les champs plus élevés. L'effet de champ créé dans l'échantillon induit une diminution quadratique de la barrière de potentiel de surface avec l'augmentation de la valeur absolue de la tension appliquée, ce qui explique la corrélation observée.

L'invention sera maintenant décrite en liaison aux figures, dont :
- la figure 1 déjà décrite est un spectre de photo-émission ultraviolette,
- la figure 2 illustre un dispositif de mesure,
- la figure 3 est un organigramme,
- et la figure 4 une illustration de résultats obtenus.

On passe à la description de la figure 2. L'échantillon mesuré comprend une couche diélectrique 3 sur un support 4 pouvant être en silicium. Le support 4 est posé sur un porte-échantillon 5 auquel une tension négative de polarisation est appliquée par une alimentation 6. Un pont en laque d'argent est réalisé entre le porte-échantillon 5 et la face avant 7 de l'échantillon d'où sont émis les électrons. Il revêt la périphérie de la couche diélectrique 3 et du support 4. Le dispositif comprend encore un émetteur 8 de lumière ultraviolette et un spectromètre 9. D'autres moyens d'application de la polarisation, comme un analyseur paramétrique permettant de mesurer aussi les courants induits dans l'échantillon, peuvent être utilisés. La détection se fait sous vide, à une pression inférieure à 10⁻⁸ bar.

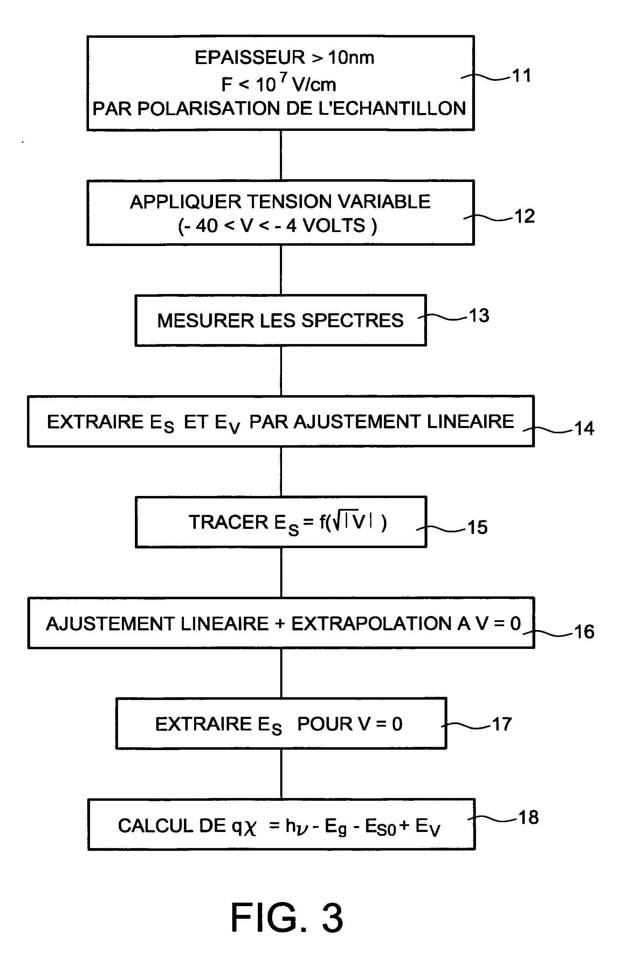

Un organigramme résumant les étapes de mesure de l'affinité électronique est celui de la figure 3. Pour un échantillon épais (d'épaisseur égale à ou supérieur à 10nm par exemple), un champ électrique inférieur à 10⁷ V/cm est créé par polarisation de l'échantillon d'après l'étape 11. Une tension de polarisation variable, comprise par exemple entre -4 et -40 V, est appliquée à l'étape 12. Pour chacune des valeurs de la tension, le spectre correspondant est mesuré à l'étape 13. Le seuil d'émission Eₛ est extrait pour chacun de ces spectres, de même que le seuil opposé Eᵥ à l'étape 14. On procède par ajustement linéaire, en calculant les intersections des tangentes au spectre avec l'axe horizontal, comme on l'a mentionné à propos de la figure 1. Les différentes valeurs du seuil d'émission sont tracées en fonction de la racine carrée de la tension de polarisation V appliquée. La droite qui en résulte est déterminée par ajustement linéaire à l'étape 15. Elle est représentée à la figure 4 sous la référence 10, les points de mesure ayant la référence 11. Il est alors possible d'extrapoler la valeur de seuil qui correspondrait à une tension de polarisation nulle (point 12 de la fonction 10) par une régression linéaire d'après les étapes 16 et 17.

L'affinité électronique peut enfin être calculée à l'étape 18 selon la formule énoncée plus haut.

Un procédé classique peut être appliqué pour des épaisseurs du diélectrique inférieures à 10 nm, par l'application d'une tension qui peut être -5 V (correspondant à un champ supérieur à 5. 10⁶ V/cm): le spectre est mesuré ; les seuils E_{S} et E_{V} sont déduits par ajustement linéaire et l'affinité électronique est calculée de la même façon qu'à l'étape 18.

## Revendications

1. Procédé de caractérisation d'une couche diélectrique (3) par spectroscopique de photo-émission ultraviolette, comprenant une polarisation électrique de la couche (3) sous une tension continue (V) et une irradiation de la couche par un rayonnement ultraviolet, une mesure d'un seuil de photo-émission (Eₛ) correspondant à une énergie de liaison maximale d'électrons émis par la couche, **caractérisé en ce que** la mesure est répétée en faisant varier la tension continue de manière à instaurer des champs inférieurs à 10⁷ V/cm à travers la couche (3), le seuil de photo-émission est mesuré pour chaque valeur de la tension appliquée et le seuil de photo-émission à tension nulle est calculé par régression sur une droite regroupant les seuils de photo-émission mesurés en fonction de la racine carrée de la tension.

2. Procédé de caractérisation selon la revendication 1, **caractérisé en ce que** la couche a une épaisseur supérieure ou égale à 10 nm.

3. Procédé de caractérisation selon la revendication 1, **caractérisé en ce qu'**il comporte encore une étape de calcul d'une affinité électronique (qχ) de la couche.

## Claims

1. A method for characterisation of a dielectric layer (3) by ultraviolet photo-emission spectroscopy, including an electric polarisation of the layer (3) subject to a direct current voltage (V) and an irradiation of the layer by an ultraviolet radiation, a measurement of a photo-emission threshold (Eₛ) corresponding to a maximum binding energy of electrons emitted by the layer, **characterised in that** the measurement is repeated whilst varying the direct current voltage so as to establish fields of less than 10⁷ V/cm through the layer (3), the photo-emission threshold is measured for each value of the applied voltage and the photo-emission threshold at zero voltage is calculated by regression over a straight line grouping together the photo-emission thresholds measured according to the square root of the voltage.

2. A method for characterisation according to claim 1, **characterised in that** the layer is of a thickness greater than or equal to 10 nm.

3. A method for characterisation according to claim 1, **characterised in that** it also includes a step of calculation of an electron affinity (qχ) of the layer.

## Patentansprüche

1. Verfahren zur Charakterisierung einer dielektrischen Schicht (3) mittels Spektroskopie von UV-Lichtemission, das Verfahren umfassend eine elektrische Vorspannung der Schicht (3) mit einer Gleichspannung (V) und eine Bestrahlung der Schicht mit einer UV-Strrahlung, sowie eine Messung eines Licht- emissions-Schwellwerts (E_{S}) entsprechend einer maximalen Bindungsenergie von durch die Schicht emittierten Elektronen,
**dadurch gekennzeichnet, dass** die Messung wiederholt erfolgt unter Variation der Gleichspannung derart, dass über der Schicht (3) jeweils Feldstärken von weniger als 10⁷ V/cm anliegen, dass der Lichtemissions-Schwellwert für jeden Betrag der angelegten Spannung gemessen und der Lichtemissions-Schwellwert bei Spannung Null mittels Extrapolation längs einer Geraden berechnet wird, die durcch Auftrag der gemessenen Lichtemissions-Schwellwerte als Funktion der Quadratwurzel der Spannung erhalten wird.

2. Verfahren zur Charakterisierung nach Anspruch 1, **dadurch gekennzeichnet, dass** die Schicht eine Dicke von gleich oder größer als 10 nm besitzt.

3. Verfahren zur Charakterisierung nach Anspruch 1, **dadurch gekennzeichnet, dass** das Verfahren des weiteren eine Verfahrensstufe der Berechnung einer Elektronenaffinität (qc) der Schicht umfasst.
